# EUROPÄISCHE PATENTANMELDUNG

(11) **EP 0 754 697 A1**
(43) Veröffentlichungstag der Anmeldung: **22.01.1997**
(21) Anmeldenummer: 96110100.3
(22) Anmeldetag: 22.06.1996
(51) Int. Cl.: C07F 9/6574, C08K 5/527

(54) **Cyclische Diphosphorsäureester und Verfahren zu ihrer Herstellung**

(30) Priorität: 17.07.1995 DE 19525950
(71) Anmelder: HOECHST AKTIENGESELLSCHAFT, 65926 Frankfurt am Main (DE)
(72) Erfinder: Staendeke, Horst, Dr., 53797 Lohmar (DE)

(57) **Zusammenfassung**

Die Erfindung betrifft cyclische Diphosphorsäureester der allgemeinen Formel 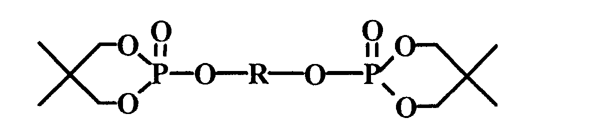 mit R = Methylethylen, 1,3-Cyclohexylen, 1,4-Cyclohexylen oder 1,3-Phenylen, ein Verfahren zu ihrer Herstellung sowie ihre Verwendung als Flammschutzmittel.

## Beschreibung

Die Erfindung betrifft cyclische Diphosphorsäureester, ein Verfahren zur ihrer Herstellung und ihre Verwendung.

Einige cyclische Diphosphorsäureester sind aus dem Stand der Technik bekannt. So beschreibt die JP-OS 54 080 355 einen cyclischen Diphosphorsäureester der Formel 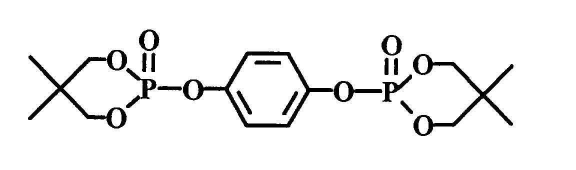 in der die phosphorhaltigen Gruppen in 1,4-Stellung an das Benzolmolekül gebunden sind.

Überraschenderweise konnte nun eine Reihe neuer cyclischer Diphosphorsäureester synthetisiert und analytisch charakterisiert werden.

Die vorliegende Erfindung betrifft daher neue cyclische Diphosphorsäureester der allgemeinen Formel 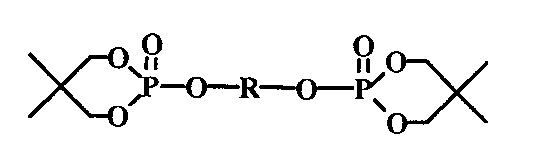 mit R = Methylethylen, 1,3-Cyclohexylen, 1,4-Cyclohexylen oder 1,3-Phenylen.

Die Erfindung betrifft ebenfalls ein Verfahren zur Herstellung der vorgenannten cyclischen Diphosphorsäureester, bei dem man in einem 1. Reaktionsschritt Diole mit Phosphoroxichlorid zum Tetrachlorid des Diphosphorsäureesters umsetzt:

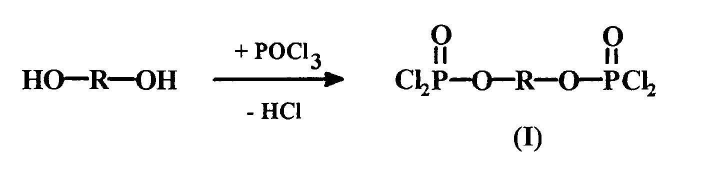

Das Tetrachlorid (I) wird dann in einem 2. Reaktionsschritt bei erhöhter Temperatur mit 2,2-Dimethyl-1,3-propandiol umgesetzt, wobei unter Abspaltung von Chlorwasserstoff der cyclische Diphosphorsäureester (II) gebildet wird:

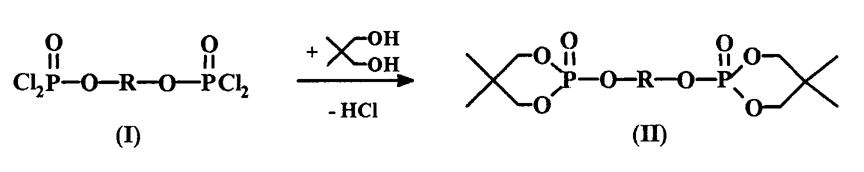

Die Umsetzungen können in geeigneten inerten Lösungsmitteln, wie Aromaten, Aliphaten, Cycloaliphaten oder Chloraliphaten, und in Gegenwart geeigneter tertiärer Amine, wie Triethylamin oder Pyridin, sowie in Gegenwart geeigneter Katalysatoren, wie Aluminiumchlorid, durchgeführt werden.
Die Umsetzungen können bei Normaldruck oder unter vermindertem Druck durchgeführt werden.

Die Erfindung betrifft weiterhin die Verwendung der erfindungsgemäßen cyclischen Diphosphorsäureester als Flammschutzmittel.

### Beispiel 1

In einem ersten Reaktionsschritt wurden 110 g 1,3-Dihydroxybenzol (Resorcin) mit 461 g Phosphoroxichlorid [gemäß DE-OS 22 00 137, Beispiel 8] zum Tetrachlorid des Resorcindiphosphorsäureesters umgesetzt. Das erhaltene Rohprodukt wurde durch eine Vakuumdestillation gereinigt.

Für den nächsten Reaktionsschritt wurden dann 172 g (1 Mol) dieses Produkts in einem Rührreaktor in 500 mi Xylol gelöst, mit 104 g (1 Mol) 2,2-Dimethyl-1,3-propandiol und 1,5 g Aluminiumchlorid (wasserfrei) versetzt und unter Rühren im Temperaturbereich von 20 - 120 °C im Verlauf von 5 Stunden zur Reaktion gebracht. Nach Abkühlung auf Raumtemperatur wurde der grobkristalline Feststoff filtriert, mit Toluol gewaschen und anschließend aus Ethanol/Wasser umkristallisiert. Es wurden 184 g eines farblosen, kristallinen Produkts mit dem Schmelzpunkt 161 - 163 °C erhalten, dessen Elementaranalyse folgende Werte ergab:
- Kohlenstoff:: 46,6 % (theoretisch für C₁₆H₂₄0₈P₂: 47,3 %)
- Wasserstoff:: 6,0 % (theoretisch für C₁₆H₂₄0₈P₂: 6,0 %)
- Phosphor:: 15,2 % (theoretisch für C₁₆H₂₄0₈P₂: 15,2 %)

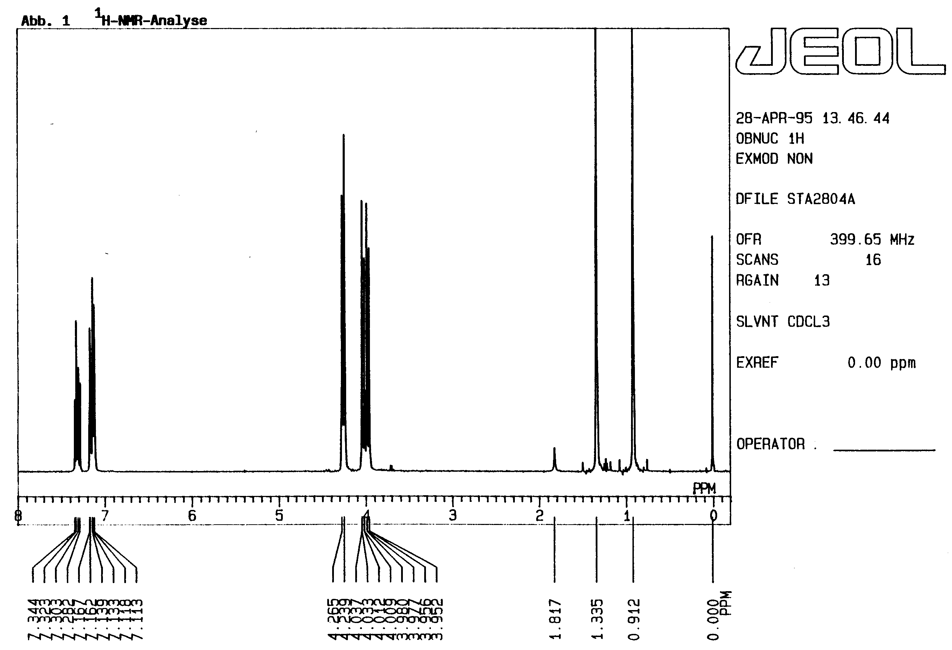

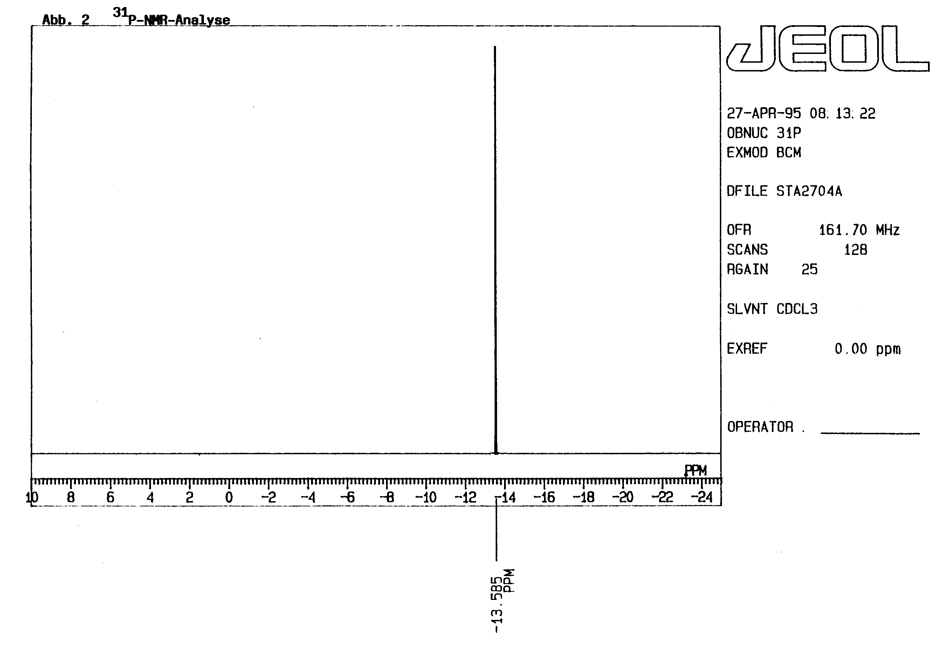

Nach den obigen Analysenwerten sowie der ¹H-NMR-Analyse (Abb. 1) und der ³¹P-NMR-Analyse (Abb. 2) handelt es sich um das Produkt 1,3-Bis[2-oxo-5,5-dimethyl-1,3,2-dioxaphosphorinanyl-2-oxy]benzol.

## Patentansprüche

1. Cyclische Diphosphorsäureester der allgemeinen Formel 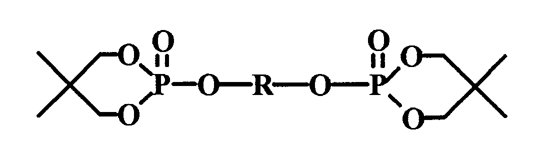 mit R = Methylethylen, 1,3-Cyclohexylen, 1,4-Cyclohexylen oder 1,3-Phenylen.

2. Verfahren zur Herstellung der cyclischen Diphosphorsäureester nach Anspruch 1, dadurch gekennzeichnet, daß man in einem 1. Reaktionsschritt Diole der allgemeinen Formel HO-R-OH, wobei R die gleiche Bedeutung wie in Anspruch 1 hat, mit Phosphoroxichlorid zum Tetrachlorid des Diphosphorsäureesters der allgemeinen Formel 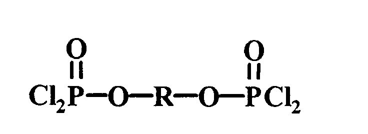 wobei R die gleiche Bedeutung wie in Anspruch 1 hat, reagieren läßt, das dann in einem 2. Reaktionsschritt bei Temperaturen von 20 - 150 °C in Gegenwart eines Katalysators in einem Zeitraum von 2 - 12 Stunden mit 2,2-Dimethyl-1,3-propandiol umgesetzt wird.

3. Verfahren nach Anspruch 2, dadurch gekennzeichnet, daß die Umsetzungen in inerten Lösungsmitteln durchgeführt werden.

4. Verfahren nach Anspruch 2, dadurch gekennzeichnet, daß die Umsetzungen in Gegenwart stöchiometrischer Mengen an geeigneten tertiären Aminen als Chlorwasserstoffakzeptoren durchgeführt werden.

5. Verfahren nach Anspruch 2, dadurch gekennzeichnet, daß auch der 1. Reaktionsschritt in Gegenwart eines Katalysators durchgeführt wird.

6. Verwendung der Diphosphorsäureester aus Anspruch 1 oder hergestellt nach den Ansprüchen 2 bis 5 als Flammschutzmittel.
